# EUROPÄISCHE PATENTSCHRIFT

(11) **EP 4 036 530 B1**
(45) Veröffentlichungstag und Bekanntmachung des Hinweises auf die Patenterteilung: **15.05.2024**
(21) Anmeldenummer: 22152717.9
(22) Anmeldetag: 21.01.2022
(51) Int. Cl.: G01F 11/34, B65B 1/08, B65B 1/32, B65B 1/42, B65B 59/04, G01F 1/58

(54) **VORRICHTUNG ZUR DOSIERUNG EINES PULVERS, INSBESONDERE EINES PULVERFÖRMIGEN PHARMAZEUTIKUMS**
DEVICE FOR DOSING A POWDER, IN PARTICULAR A POWDERY PHARMACEUTICAL PRODUCT
DISPOSITIF DE DOSAGE D'UNE POUDRE, EN PARTICULIER D'UN PRODUIT PHARMACEUTIQUE EN POUDRE

(30) Priorität: 27.01.2021 DE 102021101833
(43) Veröffentlichungstag der Anmeldung: 03.08.2022
(73) Patentinhaber: Syntegon Technology GmbH, 71332 Waiblingen (DE)
(72) Erfinder: Wagner, Bernhard, 73614 Schorndorf (DE); Brinz, Thomas, 73266 Bissingen an der Teck (DE)
(74) Vertreter: DREISS Patentanwälte PartG mbB

(56) Entgegenhaltungen:
- EP-B1- 1 749 769
- WO-A2-2012/004606
- DE-B3-102016 111 214
- DE-U1-202016 000 442

## Beschreibung

Die Erfindung betrifft eine aus der WO 2012/004606 A2 bekannte Vorrichtung zur Dosierung eines Pulvers, insbesondere eines pulverförmigen Pharmazeutikums, mit einem Vorratsbehälter, der einen Vorratsraum zur Bevorratung einer Vorratsmenge des zu dosierenden Pulvers aufweist, wobei der Vorratsbehälter eine Dosieröffnung aufweist, wobei die Vorrichtung ein bewegbar antreibbares Dosiersteuerelement aufweist, das in einer Verschlussposition die Dosieröffnung verschließt und das in mindestens einer Freigabeposition die Dosieröffnung zur Abgabe von Pulver aus dem Vorratsbehälter in einen zu befüllenden Zielbehälter freigibt, wobei die Vorrichtung eine Vibrationseinrichtung aufweist, welche das Pulver zur Unterstützung der Abgabe von Pulver in Vibration versetzt. Aus der EP 2 014 372 A1 ist eine Dosiervorrichtung bekannt, mit einem linear verschiebbaren Verschlusselement, dass eine Austragsöffnung einer Dosiereinheit verschließt oder freigibt. Zur Unterstützung des Austrags des Pulvers ist ein Schlagwerk vorgesehen, mit welchem das Verschlusselement, einer jeweiligen Freigabestellung des Verschlusselements überlagert, hin und her bewegt werden kann, um den Austrag von Pulver zu unterstützen.

Aus der DE 10 2006 034 115 A1 ist eine Dosiervorrichtung bekannt, welche ebenfalls einen Vibrationserreger umfasst. Dieser wirkt, ähnlich wie bei der EP 2 014 372 A1, mit einem Stab der Verschlussvorrichtung zusammen oder aber mit einem Vorratsgefäß für das Pulver. Aus der DE 20 2016 000 442 U1 ist eine weitere Dosiervorrichtung bekannt.

Hiervon ausgehend liegt der vorliegenden Erfindung die Aufgabe zugrunde, eine Vorrichtung zu schaffen, welche eine hochgenaue Dosierung auch sehr kleiner Pulvermengen ermöglicht.

Diese Aufgabe wird bei einer eingangs genannten Vorrichtung erfindungsgemäß durch die kennzeichnenden Merkmale des Anspruchs 1 gelöst.

Bei der erfindungsgemäßen Vorrichtung wird eine Vibrationsbewegung nur in den ersten Behälterteil, welcher die Dosieröffnung aufweist, eingeleitet. Der zweite Behälterteil ist von dieser Anregung entkoppelt, sodass die Vibrationsbewegung nicht in den zweiten Behälterteil eingeleitet wird.

Beide Behälterteile begrenzen miteinander verbundene Teilräume des Vorratsraums. Dies bedeutet, dass in jedem der Behälterteile eine Teilmenge der Vorratsmenge des Pulvers bevorratet ist. Durch die Einleitung von Vibrationen nur in den ersten Behälterteil wird aber vornehmlich nur dasjenige Pulver vibrierend angeregt, das in dem ersten Behälterteil bevorratet ist und aus der Dosieröffnung des ersten Behälterteils austreten soll. Dies ermöglicht eine besonders präzise Anregung des Pulvers. Auf diese Weise kann ein Zusammenhaften von Pulverteilen genau in demjenigen Bereich vermieden werden, aus welchem Pulver in ein Zielbehälter eindosiert werden soll. Die Teilmenge der Vorratsmenge des Pulvers, welche in dem zweiten Behälterteil angeordnet ist, wird hingegen nur indirekt, durch Kontakt der Teilmenge des Pulvers, die in dem zweiten Behälterteil angeordnet ist, mit der Teilmenge des Pulvers, die in dem ersten Behälterteil angeordnet ist, angeregt. Dies ermöglicht es auch, einen vergleichsweise kleinen Vibrationsantrieb zu verwenden. Auf diese Weise ist es insbesondere auch möglich, einen Piezoantrieb zu verwenden, der bei Bedarf mit einer besonders hohen Frequenz schwingen kann, dabei aber prinzipbedingt nur kleine Amplituden erzeugen kann.

Insbesondere, wenn das Dosiersteuerelement stufenlos in mehrere Freigabepositionen bewegbar ist, welche mit einer variierenden Größe des im Bereich der Dosieröffnung freigegebenen Dosierquerschnitts korrelieren, ermöglicht die Vorrichtung nicht nur eine hochgenaue Dosierung auch sehr kleiner Pulvermengen, sondern eine flexible Dosierung unterschiedlicher Pulverarten mit unterschiedlichen Riesel- und/oder Fließeigenschaften. Mit anderen Worten: Die Vorrichtung ermöglicht die gezielte Vibrationsbeaufschlagung genau desjenigen Teils der Vorratsmenge einer jeweils zu dosierenden Pulverart.

Eine Vibrationsachse, entlang welcher der erste Behälterteil in Vibration versetzt wird, verläuft parallel zu einer Achse, entlang welcher Pulver während des Dosiervorgangs aus der Dosieröffnung abgegeben wird. Mit anderen Worten: Der erste Behälterteil wird relativ zu dem zweiten Behälterteil so hin und her bewegt, dass ein Abstand zwischen den beiden Behälterteilen der Vibrationsfrequenz der Vibrationseinrichtung entsprechend verkürzt bzw. vergrößert wird. Vorzugsweise verläuft eine Achse, entlang welcher die beiden Behälterteile zueinander relativ bewegbar sind, ebenfalls parallel zu der vorstehend genannten Achse, entlang welcher Pulver aus der Dosieröffnung abgegeben wird.

Insbesondere ist es bevorzugt, wenn zumindest der erste Behälterteil aus einem starren Material, insbesondere aus einem metallischen Material, hergestellt ist. Dies ermöglicht einen direkten und verlustfreien Eintrag einer Vibrationsbewegung in den ersten Behälterteil hinein und von dort eine Übertragung auf die Teilmenge der Vorratsmenge des zu dosierenden Pulvers, welche in dem ersten Behälterteil angeordnet ist. Auch der zweite Behälterteil ist vorzugsweise aus einem starren Material, insbesondere aus Metall hergestellt.

Zur weiteren Verbesserung der Genauigkeit einer Dosierung ist es bevorzugt, wenn der erste Behälterteil trichterförmig ausgebildet ist, sich dessen Innenraum also insbesondere kegelstumpfförmig in Richtung der Dosieröffnung verjüngt.

Der zweite Behälterteil ist vorzugsweise zylindrisch ausgebildet, was insbesondere dann vorteilhaft ist, wenn einander zugewandte Querschnitte der beiden Teilräume gleich groß sind. Vorzugsweise ist also der zu dem Teilraum des ersten Behälterteils unmittelbar benachbarte Querschnitt des Teilraums des zweiten Behälterteils kreisförmig, wobei der den zweiten Behälterteil unmittelbar zugewandte Querschnitt des Teilraums des ersten Behälterteils ebenfalls kreisförmig ist und wobei die genannten kreisförmigen Querschnitte identisch groß und zu einer gedachten zentralen Achse kollinear angeordnet sind.

Zur Unterstützung des Austrags des Pulvers ist es ferner bevorzugt, wenn bezogen auf die Richtung der Schwerkraft der erste Behälterteil unten angeordnet ist und der zweite Behälterteil oben angeordnet ist. Eine zentrale Behälterachse kann sich dabei entlang einer Vertikalachse, also parallel zur Richtung der Schwerkraft, erstrecken. Eine Neigung des Vorratsbehälters ist denkbar.

Erfindungsgemäß ist zwischen den Behälterteilen mindestens eine elastisches Ring- oder Schlauchelement angeordnet, das einen Übergangsbereich zwischen den Teilräumen des Vorratsbehälters umgrenzt. Idealerweise ist ein von dem mindestens einen elastischen Ring- oder Schlauchelement umgrenzter Querschnitt bezogen auf eine zentrale Achse des Vorratsbehälters identisch zu den vorstehend unter Bezugnahme auf die Merkmale des Unteranspruchs 4 diskutierten Querschnitte der Teilräume des Vorratsbehälters. Auf diese Weise kann eine unerwünschte Ansammlung von Pulver im Bereich des Übergangs zwischen den Behälterteilen vermieden werden; gleichzeitig ist eine zuverlässige Nachführung von Pulver aus dem zweiten Behälterteil in den ersten Behälterteil hinein gewährleistet.

Zur vereinfachten Handhabung des Vorratsbehälters ist es ferner bevorzugt, wenn zur Verbindung der Behälterteile ein Verbindungselement vorgesehen ist, welches das mindestens eine Ring- oder Schlauchelement radial außen umfängt. Ein solches Verbindungselement ermöglicht es also, den ersten Behälterteil an dem zweiten Behälterteil zu befestigen, dabei aber die Bewegbarkeit des ersten Behälterteils relativ zu dem zweiten Behälterteil beizubehalten.

Ferner ist es bevorzugt, wenn das genannte Verbindungselement lösbar mit dem ersten Behälterteil verbindbar oder verbunden ist. Auf diese Weise ist es möglich, den Vorratsbehälter - nach Demontage von der Vorrichtung - zu öffnen und mit Pulver zu befüllen.

Dieser Füllvorgang ist besonders einfach, wenn der zweite Behälterteil einen Behälterverschluss aufweist, der pulverdicht von dem Antriebsabschnitt des Dosiersteuerelements durchsetzt ist. Dies ermöglicht es, den Behälterverschluss gemeinsam mit dem pulverdicht abschließenden Dosiersteuerelement während einer Befüllung des zweiten Behälterteils mit Pulver als bodenseitige Begrenzung des zweiten Behälterteils zu verwenden, um anschließend den ersten Behälterteil wieder zu montieren, vorzugsweise unter Verwendung des vorstehend genannten mindestens einen elastischen Ring- oder Schlauchelements und des vorstehend genannten Verbindungselements. Anschließend kann der solchermaßen befüllte Vorratsbehälter wieder mit der Vorrichtung gefügt werden.

Es ist also besonders vorteilhaft, wenn der Vorratsbehälter als Kartusche bereitgestellt ist, welche auswechselbar an der Vorrichtung gehalten ist. Dies bedeutet, dass die Befüllung einer solchen Kartusche außerhalb der Vorrichtung und losgelöst von der Vorrichtung erfolgt, dass aber die befüllte Kartusche in einfacher Weise mit der Vorrichtung gefügt und von dieser wieder gelöst werden kann.

In diesem Zusammenhang ist es besonders bevorzugt, wenn die Vorrichtung mindestens zwei Kartuschen umfasst, wobei eine erste Kartusche an der Vorrichtung gehalten ist und wobei eine zweite Kartusche eine weitere Vorratsmenge des zu dosierenden Pulvers enthält. Dies ermöglicht es, die Vorrichtung dauerhaft und zumindest weitestgehend ohne Nebenzeiten nutzen zu können. Außerdem kann eine besonders einfache Umstellung auf ein andersartiges Pulver, also beispielweise ein anderes Pharmazeutikum, erfolgen.

Bevorzugt ist es ferner, wenn die Vorrichtung ein Gestell aufweist, an welchem ein Antrieb für das Dosiersteuerelement und/oder ein Vibrationsantrieb für die Vibrationseinrichtung angeordnet ist oder sind. Auf diese Weise kann eine kompakte Einheit geschaffen werden.

Zur weiteren Vereinfachung der Handhabung ist vorgesehen, dass die Vorrichtung eine Klemmvorrichtung zur lösbaren Verbindung der Vibrationseinrichtung und des ersten Behälterteils und/oder eine Klemmeinrichtung zur lösbaren Verbindung des Gestells und des zweiten Behälterteils und/oder eine Klemmeinrichtung zur lösbaren Verbindung des Antriebs für das Dosiersteuerelement und des Dosiersteuerelements aufweist. Insbesondere wenn die Vorrichtung alle drei vorstehend genannten Klemmeinrichtungen aufweist, ist eine schnelle und einfache Montage und Demontage des Vorratsbehälters und des Dosiersteuerelements an der Vorrichtung ermöglicht.

In Ausgestaltung der Erfindung wird vorgeschlagen, dass die Vorrichtung eine insbesondere kapazitive Volumenstrom-Messeinrichtung zur Messung eines Volumenstroms des aus dem Vorratsbehälter in den zu befüllenden Zielbehälter abgegebenen Pulvers aufweist und/oder dass die Vorrichtung eine Gewichts-Messeinrichtung zur Messung des Gewichts der in den Zielbehälter abgegebenen Pulvermenge aufweist. Dies ermöglicht eine einfache, gegebenenfalls redundante Überwachung des Dosiervorgangs.

Besonders bevorzugt ist es, wenn die Vorrichtung eine Steuereinrichtung zur Ansteuerung der Vibrationseinrichtung und des Antriebs des Dosiersteuerelements aufweist und dass die Steuereinrichtung mit der Volumenstrom-Messeinrichtung und/oder mit der Gewichts-Messeinrichtung gekoppelt ist. Dies ermöglicht die Schaffung eines Regelkreises, mit welcher das Dosiersteuerelement und die Vibrationseinrichtung in Abhängigkeit der tatsächlich abgegebenen Pulvermenge ansteuerbar sind. Beispielsweise kann eine Vibrationsfrequenz der Vibrationseinrichtung verändert werden, insbesondere auch unter Beibehaltung einer ruhenden Freigabestellung des Dosiersteuerelements.

Bei einer weiteren Ausgestaltung der Vorrichtung ist es möglich, dass das Dosiersteuerelement nicht nur entlang einer Dosiersteuerelementachse bewegbar ist, um eine Verschlussposition und unterschiedliche Freigabeposition einnehmen zu können, sondern zusätzlich um diese Achse herum drehbar ist. Dies ermöglicht eine weitere Einleitung einer Bewegung in die Vorratsmenge des Pulvers, insbesondere wenn das Dosiersteuerelement zumindest auf Höhe des zweiten Behälterteils mit Rührelementen, insbesondere Rührflügeln, versehen ist.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigen
- Fig. 1: eine perspektivische Darstellung einer Ausführungsform einer Vorrichtung zur Dosierung eines Pulvers;
- Fig. 2: eine Vorderansicht der Vorrichtung gemäß Fig. 1 entsprechend einer in Fig. 1 mit II bezeichneten Sichtrichtung;
- Fig. 3: eine teilweise geschnitten dargestellte Seitenansicht der Vorrichtung gemäß Fig. 1 entsprechend einer in Fig. 1 mit III bezeichneten Sichtrichtung;
- Fig. 4: einen Horizontalschnitt der Vorrichtung gemäß Fig. 1 entsprechend einer in Fig. 2 mit IV - IV bezeichneten Schnittebene;
- Fig. 5: eine perspektivische Ansicht eines Vorratsbehälters der Vorrichtung gemäß Fig. 1;

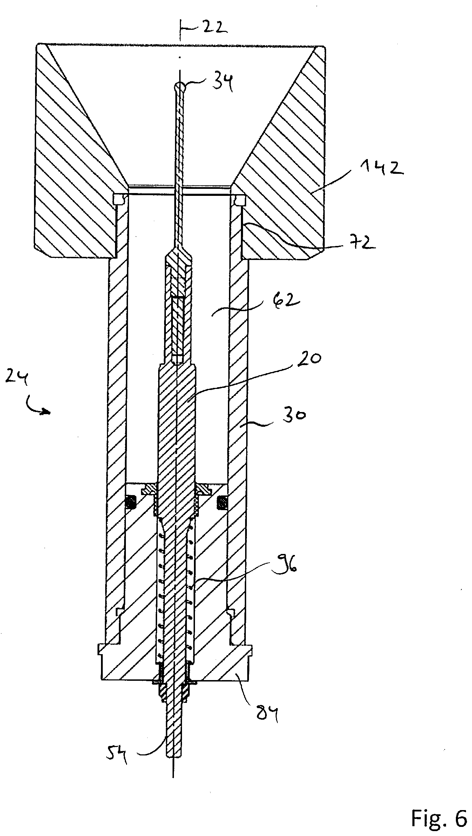

- Fig. 6: einen Vertikalschnitt eines Teils des Vorratsbehälters gemäß Fig. 5 während dessen Befüllung mit Pulver; und
- Fig. 7: einen Vertikalschnitt des Vorratsbehälters gemäß Fig. 5.

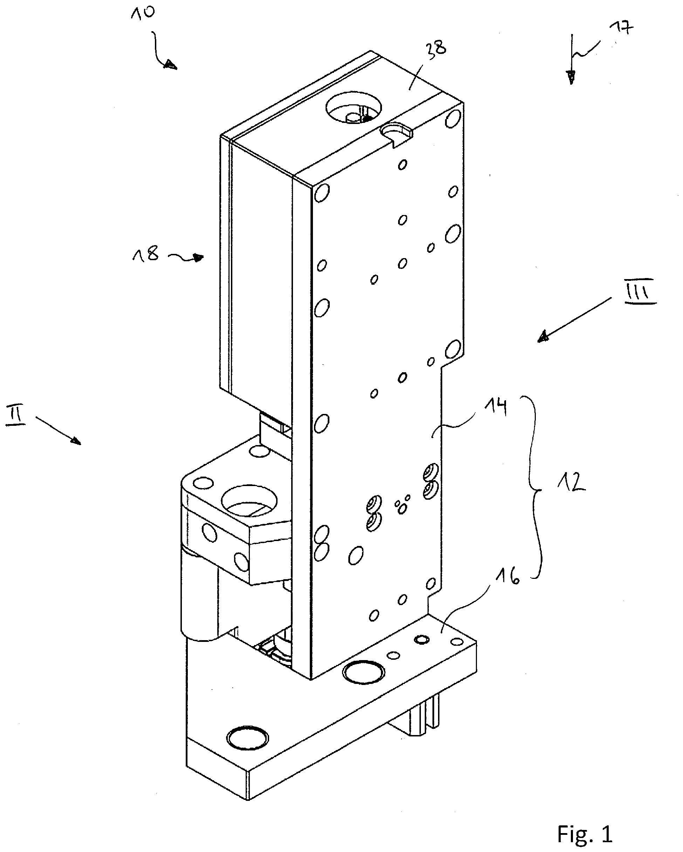

Eine Ausführungsform einer Vorrichtung zur Dosierung eines Pulvers ist in der Zeichnung insgesamt mit dem Bezugszeichen 10 bezeichnet. Die Vorrichtung 10 weist ein in Figur 1 aus einer rückwärtigen Perspektive dargestelltes Gestell 12 auf, mit einer ersten Gestellplatte 14 und einer zweiten Gestellplatte 16. In Gebrauchslage der Vorrichtung erstreckt sich die erste Gestellplatte 14 in einer vertikalen Ebene, welche sich parallel zu einer mit dem Bezugszeichen 17 bezeichneten Richtung der Schwerkraft erstreckt. Die zweite Gestellplatte 16 erstreckt sich in einer horizontalen Ebene.

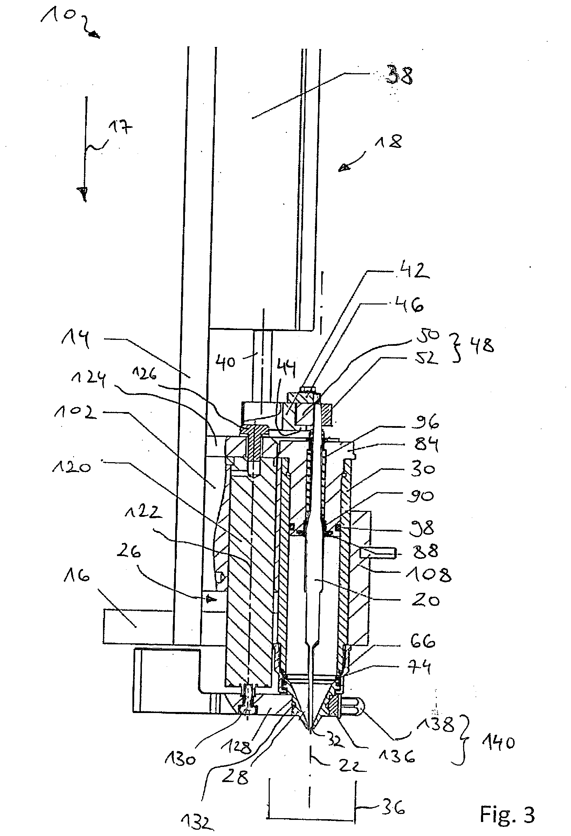

Das Gestell 12 dient zur dauerhaften Anordnung eines Antriebs 18, mittels welchem ein nadelförmiges Dosiersteuerelement (vergleiche Figur 3) entlang einer Achse 22 bewegbar antreibbar ist.

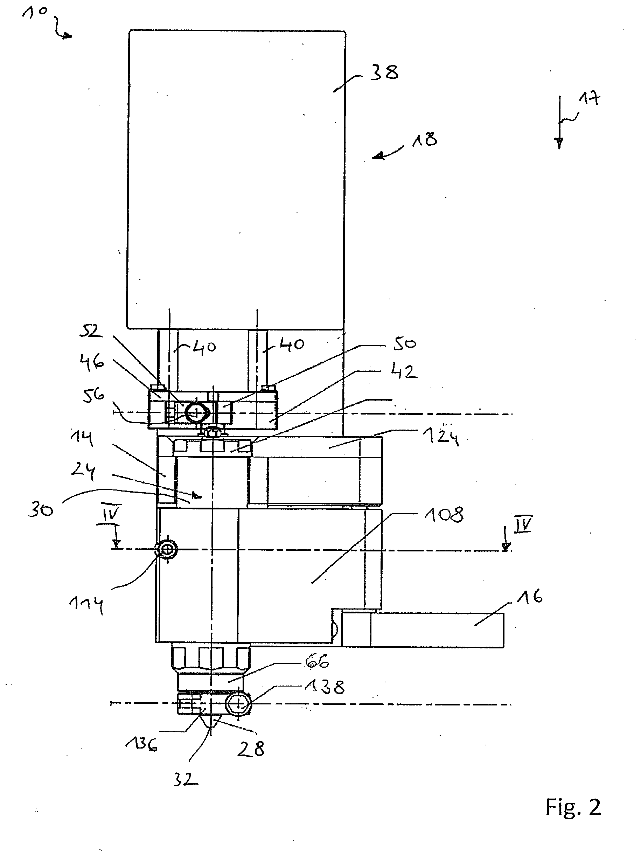

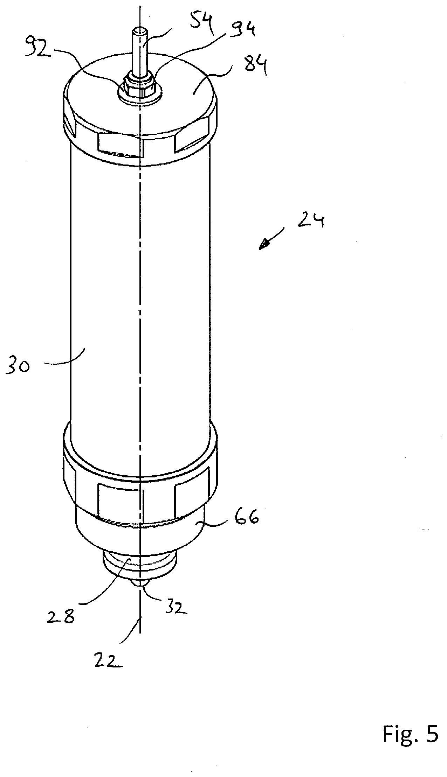

Das Gestell 12 dient außerdem zur wiederholbar lösbaren Anordnung eines Vorratsbehälters 24 zur Bevorratung einer Vorratsmenge eines zu dosierenden Pulvers, insbesondere eines pulverförmigen Pharmazeutikums, vergleiche Figuren 2 und 5.

Das Gestell 12 dient außerdem zur Anordnung einer Vibrationseinrichtung 26, vergleiche Figur 3, mittels welchem ein erster Behälterteil 28 des Vorratsbehälters 24 relativ zu einem zweiten, gestellfesten Behälterteil 30 bewegbar ist, und zwar insbesondere parallel zu der Achse 22, entlang welcher das Dosiersteuerelement 20 bewegbar antreibbar ist.

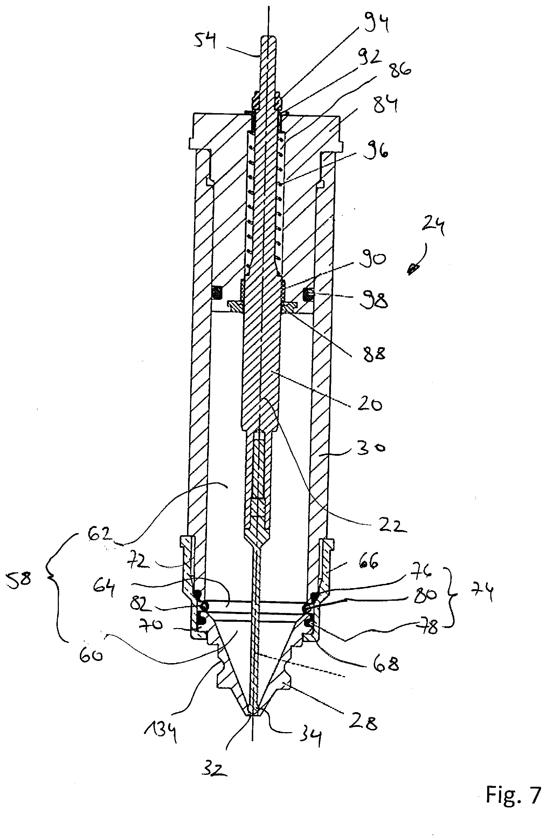

Der erste Behälterteil 28 weist an seinem in Gebrauchslage/Dosierlage des Vorratsbehälters 24 unteren Ende eine Dosieröffnung 32 auf, der in einer Verschlussposition des Dosiersteuerelements 20 von einem Verschlussabschnitt 34 des Dosiersteuerelements 20 verschlossen ist, vergleiche Figur 7. Ausgehend aus dieser Verschlussposition führt ein Anheben des Dosiersteuerelements 20 längs der Achse 22 zu einer Freigabe der Dosieröffnung 32, sodass in dem Vorratsbehälter 24 bevorratetes Pulver in einen Zielbehälter 36, vergleiche Figur 3, eindosiert wird.

Nachfolgend werden Baugruppen der Vorrichtung 10 detaillierter beschrieben.

Der Antrieb 18 für das Dosiersteuerelement 20 weist ein fest am Gestell 12 angeordnetes Antriebsgehäuse 38 auf. Von diesem ragen zwei parallel zu der Richtung 17 der Schwerkraft antreibbare Stangen 40 ab, welche mit einer Antriebsplatte 42 gekoppelt sind, vergleiche Figur 3.

Die Antriebsplatte 42 weist einen unteren Kupplungsabschnitt 44 auf, der zu einem oberen Kupplungsabschnitt 46 beabstandet ist. Die beiden Kupplungsabschnitte 42 und 46 begrenzen, parallel zu der Achse 22 des Dosiersteuerelements 20, einen Raum, in welchem eine Klemmeinrichtung 48 aufgenommen ist, welche ein Klemmbacke 50 und eine Klemmlasche 52 umfasst. Die Klemmeinrichtung 48 dient zum Klemmen eines Antriebsabschnitts 54 des Dosiersteuerelement 20, vergleiche Figur 7.

Die Klemmlasche 52 ist relativ zu der Klemmbacke 50 in ihrer Lage einstellbar, sodass ein Abstand zwischen der Klemmlasche 52 und der Klemmbacke 50 vergrößer- und verkleinerbar ist. Zu diesem Zweck ist beispielsweise eine Klemmschraube 56 vorgesehen, welche die Klemmlasche 52 durchdringt und mit der Klemmbacke 50 verschraubt ist.

Nachfolgend wird insbesondere unter Bezugnahme auf Figur 7 der Aufbau des Vorratsbehälters 24 genauer beschrieben. Der Vorratsbehälter 24 weist einen sich konzentrisch zu der Achse 22 des Dosiersteuerelements 20 erstreckenden, zusammenhängenden Vorratsraum 58 auf. Ein erster Teilraum 60 des Vorratsraums 58 ist durch den ersten Behälterteil 28 begrenzt; ein zweiter Teilraum 62 des Vorratsraums 58 ist durch den zweiten Behälterteil 30 begrenzt. Zwischen den Teilräumen 60 und 62 ist ein scheibenförmiger Übergangsbereich 64 ausgebildet, in welchem ebenfalls zu dosierendes Pulver angeordnet ist.

Die Behälterteile 28 und 30 sind mittels eines Verbindungselements 66 miteinander verbunden, derart, dass der erste Behälterteil 28 in zu der Achse 22 paralleler Richtung relativ zu dem zweiten Behälterteil 30 bewegbar ist.

Das Verbindungselement 66 überfängt mit einer Schulter 68 einen ringförmigen Halteabschnitt 70 des ersten Behälterteils 28. Anderenends ist das Verbindungselement 66 mittels einer Verschraubung 72 lösbar mit dem zweiten Behälterteil 30 verbunden.

Zur Abdichtung des Vorratsraums 58 in dem Übergangsbereich 64 ist ein elastisches Schlauchelement 74 vorgesehen, das den Übergangsbereich 64 nach außen umgrenzt. Das Schlauchelement 74 weist einen ringförmigen ersten Befestigungsabschnitt auf, der zur Abdichtung des Verbindungselements 66 und des zweiten Behälterteils 30 dient. Das Schlauchelement 74 weist einen zweiten Befestigungsabschnitt 78 auf, der zur Abdichtung zwischen dem Halteabschnitt 70 des ersten Behälterteils 28 und dem Verbindungselement 66 dient. Zwischen den beiden Befestigungsabschnitten 76 und 78 erstreckt sich eine schlauchförmige Membran 80, welche die eigentliche Umgrenzung des Übergangsbereichs 64 nach radial außen bildet.

Optional ist zur Stützung der Membran 80 ein O-Ring 82 vorgesehen, der bezogen auf die Membran 80 radial außen angeordnet ist und einen elastischen Widerstand bildet, der eine Verquetschung der Membran 80 verhindert und der die beiden Behälterteile 28 und 30 dauerhaft zueinander beabstandet.

Das Schlauchelement 74 und der optional vorhandene O-Ring 82 dienen zur pulverdichten Verbindung des ersten Behälterteils 28 und des zweiten Behälterteils 30 und gleichzeitig zur schwingungstechnischen Entkoppelung zwischen dem ersten Behälterteil 28 und dem zweiten Behälterteil 30.

Der zweite Behälterteil 30 weist an seinem dem ersten Behälterteil 28 abgewandten Ende einen Behälterverschluss 84 auf, der den zweiten Behälterteil 30 pulverdicht verschließt. Gleichzeitig dient der Behälterverschluss 84 dazu, einen pulverdichten Durchtritt für den Antriebsabschnitt 54 des Dosiersteuerelements 20 bereitzustellen. Zu diesem Zweck weist der Behälterverschluss 84 einen Durchtritt 86 auf und an seinem, dem Vorratsraum 58 zugewandten Ende einen Abstreifer 88 und eine Gleitbuchse 90 auf.

Eine entsprechende Gleitbuchse 92 ist an dem gegenüberliegenden Ende des Durchtritts 86 angeordnet. Hierzu benachbart trägt das Dosiersteuerelement 20 eine Sicherungsmutter 94, welche verhindert, dass das Dosiersteuerelement 20 zu weit in den Vorratsbehälter 24 hineinverschoben wird, wodurch der Verschlussabschnitt 34 und/oder die Dosieröffnung 32 beschädigt werden könnten.

Das Dosiersteuerelement 20 ist in Richtung der Verschlussposition des Dosiersteuerelements 20 vorgespannt und zwar vorzugsweise mittels einer in dem Durchtritt 86 angeordneten Druckfeder 96.

Schließlich ist zur Abdichtung des Behälterverschlusses 84 und einer Innenwandung des zweiten Behälterteils 30 eine Dichtung 98 vorgesehen.

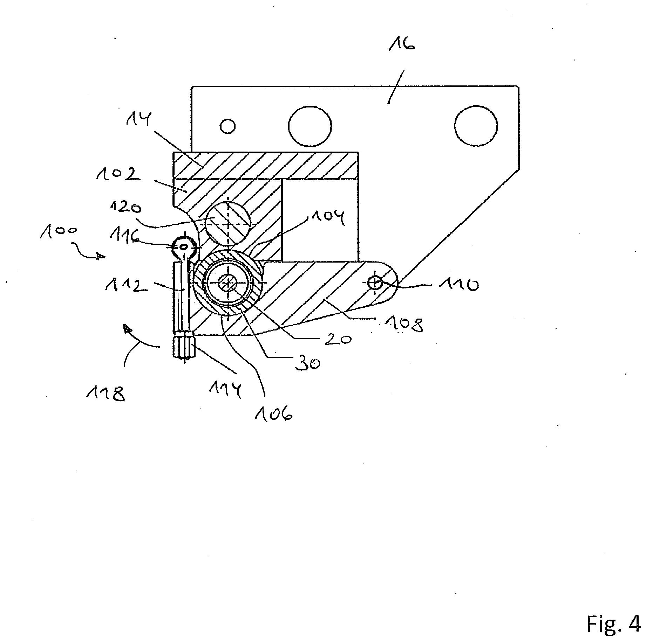

Zur Fixierung des zweiten Behälterteils 30 an dem Gestell 12 ist eine in Figur 4 dargestellte Klemmeinrichtung 100 vorgesehen. Die Klemmeinrichtung 100 umfasst einen Grundkörper 102, der fest mit der ersten Halteplatte 14 verbunden ist. Der Grundkörper 102 bildet eine gekrümmte Klemmfläche 104 aus, welche zur Anlage an die Außenfläche des zweiten Behälterteils 30 dient. Eine zweite Klemmfläche 106 ist durch einen Klemmbügel 108 gebildet, der um eine vorzugsweise vertikale Schwenkachse 110 verschwenkbar ist. Die Schwenkachse 110 ist an der zweiten Gestellplatte 16 angeordnet.

Zur Sicherung des Klemmbügels 108 und zum Klemmen des zweiten Behälterteils 30 ist ein Schwenkarm 112 mit einem Sicherungselement 114 vorgesehen. Der Schwenkarm 112 ist um eine Schwenkachse 116, die an dem Gehäusekörper 102 angeordnet ist, verschwenkbar, entsprechend einer in Figur 4 dargestellten Schwenkrichtung 118 (nach Lösen des Sicherungselements 114).

Der Gehäusekörper 102 dient auch zur Aufnahme eines Vibrationsantriebs 120, vergleiche Figuren 4 und 3. Der Vibrationsantrieb 120 ist vorzugsweise in Form eines Piezoaktors ausgebildet, der sich längs einer Antriebsachse 122 erstreckt. Vorzugsweise verläuft die Achse 122 des Vibrationsantriebs 120 parallel zu der Achse 22 des Dosiersteuerelements 20.

Der Vibrationsantrieb 120 ist an einem oberen Ende an einer gestellfesten Halteplatte 124 fixiert, beispielsweise mittels einer Schraube 126. Anderenends ist der Vibrationsantrieb 120 mit einer Antriebsplatte 128 verbunden, beispielsweise mittels einer Verschraubung 132. Die Antriebsplatte 128 weist einen Vorsprung 132 auf, der bezogen auf die Achse 22 des Dosiersteuerelements 20 formschlüssig mit einer Vorsprungaufnahme 134 des ersten Behälterteils 28 zusammenwirkt, vergleiche Figur 7.

Zur Verbindung zwischen der Antriebsplatte 128 und dem ersten Behälterteil 28 ist eine relativ zu der Antriebsplatte 128 bewegbare Klemmbacke 136 vorgesehen, die mit einem Sicherungselement 138 gesichert ist. Somit ist eine weitere Klemmeinrichtung 140 vorgesehen, mittels welcher die Antriebsplatte 128 des Vibrationsantriebs 120 lösbar mit dem ersten Behälterteil 28 verbindbar ist.

Nachfolgend werden die Befüllung eines Vorratsbehälters 24 und die Funktionsweise der Vorrichtung 10 beschrieben.

Der Vorratsbehälter 24 ist als auswechselbar an der Vorrichtung 10 gehaltene Kartusche bereitgestellt, die in Figur 5 dargestellt ist. Vorzugsweise umfasst die Vorrichtung 10 mindestens zwei Kartuschen.

Zur Befüllung des als Kartusche ausgebildeten Vorratsbehälters 24 wird dieser ausgehend aus der in Figur 5 dargestellten Gebrauchslage/Dosierlage um 180° verdreht, sodass nach der Verdrehung das Verbindungselement 66 und der erste Behälterteil 28 oberhalb des zweiten Behälterteils 30 angeordnet sind. Anschließend wird das Verbindungselement 66 von dem zweiten Behälterteil 30 abgeschraubt; der erste Behälterteil 28 und das Schlauchelement 74 und gegebenenfalls der O-Ring 82 werden entfernt.

In dem "umgedrehten" Zustand des zweiten Behälterteils 30 bildet der Behälterverschluss 84, welcher von dem Antriebsabschnitt 54 des Dosiersteuerelements 20 durchdrungen ist, einen bodenseitigen Verschluss für den zweiten Teilraum 62 des zweiten Behälterteils 30. Das obere und freie Ende des zweiten Behälterteils 30 kann nun mit einer Vorratsmenge von zu dosierendem Pulver gefüllt werden. Zur Vereinfachung des Befüllvorgangs kann ein Aufschraubtrichter 142 verwendet werden, der mit der Verschraubung 72 zusammenwirkt. Vorzugsweise ist der Aufschraubtrichter 142 so hoch, dass der Verschlussabschnitt 34 des Dosiersteuerelements 20 durch den Aufschraubtrichter 142 geschützt ist.

Nach Abschluss der Befüllung des zweiten Behälterteils 30 kann der gegebenenfalls verwendete Aufschraubtrichter 142 entfernt werden. Nun werden das Schlauchelement 74, gegebenenfalls der O-Ring 82 und der erste Behälterteil 28 montiert, und zwar unter Verwendung des Verbindungselements 66. Durch die Wirkung der Druckfeder 96 gelangt der Verschlussabschnitt 34 des Dosiersteuerelements 20 in seine Verschlussposition, sodass die Dosieröffnung 32 verschlossen ist. Anschließend kann die solchermaßen befüllte Kartusche wieder umgedreht werden, sodass die Dosieröffnung 32, wie in Figur 7 dargestellt, sich wieder an dem unteren Ende der Kartusche bzw. des Vorratsbehälters 24 befindet.

In einem nächsten Schritt werden die Klemmeinrichtungen 48, 100 und 140 so vorbereitet, dass der befüllte Vorratsbehälter 24 an der Vorrichtung 10 montiert werden kann.

Zunächst wird der erste Behälterteil 28 des befüllten Vorratsbehälters 24 in die Antriebsplatte 128 eingesetzt. Anschließend wird der zweite Behälterteil 30 mittels der Klemmeinrichtung 100 an dem Gestell 12 fixiert. Danach wird unter Betätigung der Klemmeinrichtung 140 die Antriebsplatte 128 mit dem ersten Behälterteil 28 verbunden. Schließlich wird durch Betätigung der Klemmeinrichtung 48 eine Wirkverbindung zwischen dem Antrieb 18 für das Dosiersteuerelement 20 und dem Antriebsabschnitt 54 des Dosiersteuerelements 20 hergestellt.

Für eine Befüllung eines Zielbehälters 36 wird der Antrieb 18 so betätigt, dass das Dosiersteuerelement 20, ausgehend aus der Verschlussposition (Anlage des Verschlussabschnitts 34 an der Dosieröffnung 32) abgehoben wird und eine Freigabeposition erreicht wird. Zur Unterstützung der Abgabe von zu dosierendem Pulver wird der Vibrationsantrieb 120 betätigt, sodass (bei ruhendem zweiten Behälterteil 30) der erste Behälterteil 28 parallel zu der Achse 22 des Dosiersteuerelements 20 in Vibration versetzt wird.

Es ist möglich, dass die aus der Dosieröffnung 32 abgegebene Pulvermenge mittels einer nicht dargestellten Volumenstrom-Messeinrichtung überwacht wird. Es ist alternativ oder zusätzlich hierzu auch möglich, dass das Gewicht der in den Zielbehälter eindosierten Pulvermenge mittels einer (nicht dargestellten) Gewichts-Messeinrichtung überwacht wird. Die vorstehend genannten Messeinrichtungen können also Ist-Werte bereitstellen, die von einer (nicht dargestellten) Steuereinrichtung zur Steuerung des Antriebs 18 des Dosiersteuerelements 20 und/oder des Vibrationsantriebs 120 genutzt werden. Somit steuert die Steuereinrichtung bei Abweichung von vorgegebenen Sollwerten den Antrieb 18 und/oder den Vibrationsantrieb 120 derart an, dass ein vorgegebener Sollwert für eine zu dosierende Pulvermenge erreicht wird. Diese Steuerung kann mit einer Veränderung der Freigabeposition des Dosiersteuerelements 20 und/oder unter einer Veränderung des Hubs und/oder der Frequenz des Vibrationsantriebs 120 einhergehen.

## Patentansprüche

1. Vorrichtung (10) zur Dosierung eines Pulvers, insbesondere eines pulverförmigen Pharmazeutikums, mit einem Vorratsbehälter (24), der einen Vorratsraum (58) zur Bevorratung einer Vorratsmenge des zu dosierenden Pulvers aufweist, wobei der Vorratsbehälter (24) eine Dosieröffnung (32) aufweist, wobei die Vorrichtung (10) ein bewegbar antreibbares Dosiersteuerelement (20) aufweist, das in einer Verschlussposition die Dosieröffnung (32) verschließt und das in mindestens einer Freigabeposition die Dosieröffnung (32) zur Abgabe von Pulver aus dem Vorratsbehälter (24) in einen zu befüllenden Zielbehälter (36) freigibt, wobei die Vorrichtung (10) eine Vibrationseinrichtung (26) aufweist, welche das Pulver zur Unterstützung der Abgabe von Pulver in Vibration versetzt, dadurch wobei der Vorratsbehälter (24) zwei relativ zueinander bewegbare Behälterteile (28, 30) aufweist, welche miteinander verbundene Teilräume (60, 62) des Vorratsraums (58) begrenzen und jeweils eine Teilmenge der Vorratsmenge des Pulvers bevorraten, wobei ein erster Behälterteil (28) die Dosieröffnung (32) aufweist und wobei die Vibrationseinrichtung (26) mit dem ersten Behälterteil (28) zusammenwirkt und somit die in dem ersten Behälterteil (28) angeordnete Teilmenge des Pulvers in Vibration versetzt und wobei die Vibrationseinrichtung (26) von dem zweiten Behälterteil (30) entkoppelt ist, wobei eine Vibrationsachse, entlang welcher der erste Behälterteil (28) in Vibration versetzt wird, parallel zu einer Achse verläuft, entlang welcher Pulver während des Dosiervorgangs aus der Dosieröffnung (32) abgegeben wird, **dadurch gekennzeichnet, dass** zwischen den Behälterteilen (28, 30) mindestens ein elastisches Ring- oder Schlauchelement (74) angeordnet ist, das einen Übergangsbereich (64) zwischen den Teilräumen (60, 62) des Vorratsbehälters (24) umgrenzt.

2. Vorrichtung (10) nach Anspruch 1, **dadurch gekennzeichnet, dass** der erste Behälterteil (28) trichterförmig ausgebildet ist und/oder dass der zweite Behälterteil (30) zylindrisch ausgebildet ist.

3. Vorrichtung (10) nach einem der vorstehenden Ansprüche, **dadurch gekennzeichnet, dass** einander zugewandte Querschnitte der beiden Teilräume (60, 62) gleich groß sind.

4. Vorrichtung (10) nach einem der vorstehenden Ansprüche, **dadurch gekennzeichnet, dass** bezogen auf die Richtung (17) der Schwerkraft der erste Behälterteil (28) unten angeordnet ist und der zweite Behälterteil (30) oben angeordnet ist.

5. Vorrichtung (10) nach einem der vorstehenden Ansprüche, **dadurch gekennzeichnet, dass** zur Verbindung der Behälterteile (28, 30) ein Verbindungselement (66) vorgesehen ist, welches das mindestens eine Ring- oder Schlauchelement (74) radial außen umfängt.

6. Vorrichtung (10) nach Anspruch 5, **dadurch gekennzeichnet, dass** das Verbindungselement (66) lösbar mit dem ersten Behälterteil (28) verbindbar oder verbunden ist.

7. Vorrichtung (10) nach einem der vorstehenden Ansprüche, **dadurch gekennzeichnet, dass** der zweite Behälterteil (30) einen Behälterverschluss (84) aufweist, der pulverdicht von einem Antriebsabschnitt (54) des Dosiersteuerelements (20) durchsetzt ist.

8. Vorrichtung (10) nach einem der vorstehenden Ansprüche, **dadurch gekennzeichnet, dass** der Vorratsbehälter (24) als Kartusche bereitgestellt ist, welche auswechselbar an der Vorrichtung (10) gehalten ist.

9. Vorrichtung (10) nach einem der vorstehenden Ansprüche, **dadurch gekennzeichnet, dass** die Vorrichtung (10) mindestens zwei Kartuschen umfasst, wobei eine erste Kartusche an der Vorrichtung (10) gehalten ist und wobei eine zweite Kartusche eine weitere Vorratsmenge des zu dosierenden Pulvers enthält.

10. Vorrichtung (10) nach einem der vorstehenden Ansprüche, **dadurch gekennzeichnet, dass** die Vorrichtung (10) ein Gestell (12) aufweist, an welchem ein Antrieb (18) für das Dosiersteuerelement (20) und/oder ein Vibrationsantrieb (120) für die Vibrationseinrichtung (26) angeordnet ist oder sind.

11. Vorrichtung (10) nach einem der vorstehenden Ansprüche, **dadurch gekennzeichnet, dass** die Vorrichtung (10) eine Klemmeinrichtung (140) zur lösbaren Verbindung der Vibrationseinrichtung (26) und des ersten Behälterteils (28) und/oder eine Klemmeinrichtung (100) zur lösbaren Verbindung des Gestells (12) und des zweiten Behälterteils und/oder eine Klemmeinrichtung (48) zur lösbaren Verbindung eines Antriebs (18) für das Dosiersteuerelement (20) und des Dosiersteuerelements (20) aufweist.

12. Vorrichtung (10) nach einem der vorstehenden Ansprüche, **dadurch gekennzeichnet, dass** die Vorrichtung (10) eine insbesondere kapazitive Volumenstrom-Messeinrichtung zur Messung eines Volumenstroms des aus dem Vorratsbehälter (24) in den zu befüllenden Zielbehälter (36) abgebenen Pulvers aufweist und/oder dass die Vorrichtung (10) eine Gewichts-Messeinrichtung zur Messung des Gewichts der in den Zielbehälter (36) abgebenen Pulvermenge aufweist.

13. Vorrichtung (10) nach Anspruch 12, **dadurch gekennzeichnet, dass** die Vorrichtung (10) eine Steuereinrichtung zur Ansteuerung der Vibrationseinrichtung (26) und des Antriebs (18) des Dosiersteuerelements (20) aufweist und dass die Steuereinrichtung mit der Volumenstrom-Messeinrichtung und/oder mit der Gewichts-Messeinrichtung gekoppelt ist.

14. Vorrichtung (10) nach einem der vorstehenden Ansprüche, **dadurch gekennzeichnet, dass** der erste Behälterteil (28) aus einem starren Material hergestellt ist und dass der zweite Behälterteil (30) aus einem starren Material hergestellt ist.

15. Vorrichtung (10) nach einem der vorstehenden Ansprüche, **dadurch gekennzeichnet, dass** der erste Behälterteil (28) relativ zu dem zweiten Behälterteil (30) so hin und her bewegt wird, dass ein Abstand zwischen den beiden Behälterteilen (28, 30) einer Vibrationsfrequenz der Vibrationseinrichtung (26) entsprechend verkürzt bzw. vergrößert wird.

## Claims

1. Device (10) for dosing a powder, in particular a pulverulent pharmaceutical, having a storage container (24) which has a storage chamber (58) for storing a stored quantity of the powder to be dosed, wherein the storage container (24) has a dosing opening (32), wherein the device (10) has a dosing control element (20) which can be movably driven and which, in a closing position, closes the dosing opening (32) and, in at least one freeing position, frees the dosing opening (32) for the dispensing of powder from the storage container (24) into a target container (36) to be filled, wherein the device (10) has a vibration means (26) which sets the powder in vibration in order to assist with the dispensing of powder, wherein the storage container (24) has two container parts (28, 30) which are movable relative to one another and which delimit mutually connected sub-chambers (60, 62) of the storage chamber (58) and each store a portion of the stored quantity of powder, wherein a first container part (28) has the dosing opening (32) and wherein the vibration means (26) cooperates with the first container part (28) and thus sets the portion of the powder that is disposed in the first container part (28) in vibration, and wherein the vibration means (26) is uncoupled from the second container part (30), wherein a vibration axis along which the first container part (28) is set in vibration runs parallel to an axis along which powder is dispensed from the dosing opening (32) during the dosing process, **characterized in that** there is arranged between the container parts (28, 30) at least one resilient annular or tubular element (74) which bounds a transition region (64) between the sub-chambers (60, 62) of the storage container (24).

2. Device (10) according to Claim 1, **characterized in that** the first container part (28) is funnel-shaped and/or **in that** the second container part (30) is cylindrical.

3. Device (10) according to one of the preceding claims, **characterized in that** mutually facing cross-sections of the two sub-chambers (60, 62) are of the same size.

4. Device (10) according to one of the preceding claims, **characterized in that**, based on the direction (17) of gravity, the first container part (28) is arranged at the bottom and the second container part (30) is arranged at the top.

5. Device (10) according to one of the preceding claims, **characterized in that**, for connecting the container parts (28, 30), a connecting element (66) is provided which radially outwardly surrounds the at least one annular or tubular element (74).

6. Device (10) according to Claim 5, **characterized in that** the connecting element (66) can be connected or is connected releasably to the first container part (28).

7. Device (10) according to one of the preceding claims, **characterized in that** the second container part (30) has a container closure (84) through which a drive portion (54) of the dosing control element (20) passes in a powder-tight manner.

8. Device (10) according to one of the preceding claims, **characterized in that** the storage container (24) is in the form of a cartridge which is held interchangeably on the device (10).

9. Device (10) according to one of the preceding claims, **characterized in that** the device (10) comprises at least two cartridges, wherein a first cartridge is held on the device (10) and wherein a second cartridge contains a further stored quantity of the powder to be dosed.

10. Device (10) according to one of the preceding claims, **characterized in that** the device (10) has a frame (12) on which a drive (18) for the dosing control element (20) and/or a vibratory drive (120) for the vibration means (26) is or are arranged.

11. Device (10) according to one of the preceding claims, **characterized in that** the device (10) has a clamping device (140) for the releasable connection of the vibration means (26) and the first container part (28) and/or a clamping device (100) for the releasable connection of the frame (12) and the second container part and/or a clamping device (48) for the releasable connection of a drive (18) for the dosing control element (20) and the dosing control element (20).

12. Device (10) according to one of the preceding claims, **characterized in that** the device (10) has a volume flow measuring device, in particular a capacitive volume flow measuring device, for measuring a volume flow of the powder dispensed from the storage container (24) into the target container (36) to be filled, and/or **in that** the device (10) has a weight measuring device for measuring the weight of the quantity of powder dispensed into the target container (36).

13. Device (10) according to Claim 12, **characterized in that** the device (10) has a control device for controlling the vibration means (26) and the drive (18) of the dosing control element (20), and **in that** the control device is coupled with the volume flow measuring device and/or with the weight measuring device.

14. Device (10) according to one of the preceding claims, **characterized in that** the first container part (28) is made from a rigid material and that the second container part (30) is made from a rigid material.

15. Device (10) according to one of the preceding claims, **characterized in that** the first container part (28) is moved back and fro relative to the second container part (30) in such a manner that a distance between the two container parts (28, 30) is made smaller and larger, respectively, in accordance with a vibration frequency of the vibration means (26).

## Revendications

1. Dispositif (10) pour le dosage d'une poudre, en particulier d'un produit pharmaceutique en poudre, avec un récipient de stockage (24) qui présente un espace de stockage (58) pour stocker une quantité de réserve de la poudre à doser, dans lequel le récipient de stockage (24) présente une ouverture de dosage (32), dans lequel le dispositif (10) présente un élément de commande de dosage (20) pouvant être entraîné de manière mobile, qui, dans une position de fermeture, ferme l'ouverture de dosage (32) et qui, dans au moins une position de libération, libère l'ouverture de dosage (32) pour délivrer de la poudre du récipient de stockage (24) dans un récipient cible (36) à remplir, dans lequel le dispositif (10) présente un système de vibration (26), lequel fait vibrer la poudre pour favoriser la délivrance de la poudre, dans lequel le récipient de stockage (24) présente deux parties de récipient (28, 30) mobiles l'une par rapport à l'autre, lesquelles relient entre elles des espaces partiels (60, 62) de l'espace de stockage (58) et stockent chacune une quantité partielle de la quantité de stockage de la poudre, dans lequel une première partie de récipient (28) présente l'ouverture de dosage (32) et dans lequel le système de vibration (26) coopère avec la première partie de récipient (28) et fait ainsi vibrer la quantité partielle de poudre disposée dans la première partie de récipient (28) et dans lequel le système de vibration (26) est découplé de la deuxième partie de récipient (30), dans lequel un axe de vibration, le long duquel la première partie de récipient (28) est mise en vibration, s'étend parallèlement à un axe le long duquel la poudre est délivrée par l'ouverture de dosage (32) pendant le processus de dosage, **caractérisé en ce qu'**au moins un élément annulaire ou tubulaire élastique (74) est disposé entre les parties de récipient (28, 30), qui délimite une zone de transition (64) entre les espaces partiels (60, 62) du récipient (24).

2. Dispositif (10) selon la revendication 1, **caractérisé en ce que** la première partie de récipient (28) est réalisée en forme d'entonnoir et/ou **en ce que** la deuxième partie de récipient (30) est réalisée de manière cylindrique.

3. Dispositif (10) selon l'une quelconque des revendications précédentes, **caractérisé en ce que** des sections transversales des deux espaces partiels (60, 62) tournées l'une vers l'autre sont de même taille.

4. Dispositif (10) selon l'une quelconque des revendications précédentes, **caractérisé en ce que**, par rapport à la direction (17) de la pesanteur, la première partie de récipient (28) est disposée en bas et la deuxième partie de récipient (30) est disposée en haut.

5. Dispositif (10) selon l'une quelconque des revendications précédentes, **caractérisé en ce que**, pour relier les parties de récipient (28, 30), il est prévu un élément de liaison (66), lequel entoure radialement à l'extérieur l'au moins un élément annulaire ou tubulaire (74).

6. Dispositif (10) selon la revendication 5, **caractérisé en ce que** l'élément de liaison (66) peut être relié ou est relié de manière amovible à la première partie de récipient (28).

7. Dispositif (10) selon l'une quelconque des revendications précédentes, **caractérisé en ce que** la deuxième partie de récipient (30) présente une fermeture de récipient (84) qui est traversée de manière étanche à la poudre par une section d'entraînement (54) de l'élément de commande de dosage (20).

8. Dispositif (10) selon l'une quelconque des revendications précédentes, **caractérisé en ce que** le récipient de stockage(24) est fourni sous la forme d'une cartouche, laquelle est maintenue de manière interchangeable sur le dispositif (10).

9. Dispositif (10) selon l'une quelconque des revendications précédentes, **caractérisé en ce que** le dispositif (10) comprend au moins deux cartouches, dans lequel une première cartouche est maintenue sur le dispositif (10) et dans lequel une deuxième cartouche contient une autre quantité de réserve de la poudre à doser.

10. Dispositif (10) selon l'une quelconque des revendications précédentes, **caractérisé en ce que** le dispositif (10) présente un bâti (12) sur lequel est ou sont disposés un entraînement (18) pour l'élément de commande de dosage (20) et/ou un entraînement de vibration (120) pour le système de vibration (26).

11. Dispositif (10) selon l'une quelconque des revendications précédentes, **caractérisé en ce que** le dispositif (10) présente un système de serrage (140) pour relier de manière amovible le système de vibration (26) et la première partie de récipient (28) et/ou un système de serrage (100) pour relier de manière amovible le châssis (12) et la deuxième partie de récipient et/ou un système de serrage (48) pour relier de manière amovible un entraînement (18) pour l'élément de commande de dosage (20) et l'élément de commande de dosage (20).

12. Dispositif (10) selon l'une quelconque des revendications précédentes, **caractérisé en ce que** le dispositif (10) présente un système de mesure de débit volumique, notamment capacitif, pour mesurer un débit volumique de la poudre délivrée par le récipient de stockage (24) dans le récipient cible (36) à remplir, et/ou **en ce que** le dispositif (10) présente un système de mesure de poids pour mesurer le poids de la quantité de poudre délivrée dans le récipient cible (36).

13. Dispositif (10) selon la revendication 12, **caractérisé en ce que** le dispositif (10) présente un système de commande pour commander le système de vibration (26) et l'entraînement (18) de l'élément de commande de dosage (20) et **en ce que** le système de commande est accouplé au système de mesure de débit volumique et/ou au système de mesure de poids.

14. Dispositif (10) selon l'une quelconque des revendications précédentes, **caractérisé en ce que** la première partie de récipient (28) est fabriquée à partir d'un matériau rigide et **en ce que** la deuxième partie de récipient (30) est réalisée à partir d'un matériau rigide.

15. Dispositif (10) selon l'une quelconque des revendications précédentes, **caractérisé en ce que** la première partie de récipient (28) est déplacée en va-et-vient par rapport à la deuxième partie de récipient (30), de telle sorte qu'une distance entre les deux parties de récipient (28, 30) est respectivement raccourcie et augmentée en fonction d'une fréquence de vibration du système de vibration (26).
